(19)

**Europäisches Patentamt**

**European Patent Office**

**Office européen des brevets**

(11) **EP 4 707 240 A1**

(12) **EUROPEAN PATENT APPLICATION**

(43) Date of publication:
**11.03.2026   Bulletin 2026/11**

(21) Application number: **24306461.5**

(22) Date of filing: **06.09.2024**

(51) International Patent Classification (IPC):
*C01B 39/02* (2006.01)      *B01J 29/08* (2006.01)
*B01J 37/10* (2006.01)      *C01B 39/24* (2006.01)

(52) Cooperative Patent Classification (CPC):
**C01B 39/026; B01J 29/084; B01J 37/10;**
**C01B 39/24; C01B 39/26;** B01J 2229/38

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicants:
 • **Université de Poitiers**
   **86000 Poitiers (FR)**
 • **Centre National de la Recherche Scientifique**
   **75016 Paris (FR)**

 • **Universidade Federal do Rio Grande do Norte**
   **CEP 59078-900 Natal - RN (BR)**

(72) Inventors:
 • **SACHSE, Alexander**
   **86180 Buxerolles (FR)**
 • **SOARES DE SOUZA, Iane Maiara**
   **59127-600 Natal-RN (BR)**
 • **PERGHER, Sibele Berenice Castella**
   **Natal   RN (BR)**

(74) Representative: **Santarelli**
   **Tour Trinity**
   **1 bis Place de la Défense**
   **92400 Courbevoie (FR)**

(54) **METHOD FOR MODIFYING ACIDIC PROPERTIES OF MICROPOROUS CRYSTALLINE ZEOLITES**

(57)   The invention relates to a method of treating a dealuminated microporous crystalline zeolite, such as a Ultrastable Zeolite Y, in particular for modifying acidic properties thereof. This method comprises successive steps of: impregnating said zeolite with a solution containing a tetraalkyl ammonium hydroxide in a liquid vehicle, drying the impregnated zeolite, and contacting the dried zeolite with water vapor at a temperature of between 100 and 200 °C. The zeolite thus obtained is particularly useful for use as a catalyst in fluid catalytic cracking processes.

EP 4 707 240 A1

**Description**

The invention lies in the field of treatment of zeolites in order to improve their characteristics and properties.

More particularly, the invention relates to a method of treating a microporous crystalline zeolite which has been previously subjected to a dealumination treatment, in order to modify the textural and/or acidic properties thereof.

Zeolites are crystalline materials consisting primarily of a three-dimensional framework of $SiO_4$ (silicate) and $AlO_4$ (aluminate) tetrahedra. These tetrahedra are connected by shared oxygen atoms, forming a regular lattice structure with interconnected pores and channels.

Zeolites are widely used in many fields taking advantage of their regular microporous structure, strong acidity and ion-exchange capability. One of the most important fields of application of zeolites is catalysis, and more particularly fluid cracking catalysis, for example for petrochemical processing.

Fluid catalytic cracking (FCC) is one of the major conversion technologies in the oil refinery industry, widely used for transforming the high boiling point high molecular weight hydrocarbons present in crude oils into lighter and more valuable fractions such as diesel, gasoline and olefinic gases. FCC processes currently produce the majority of the world's gasoline, this process being in operation at over 300 out of a total of 646 refineries worldwide. Apart from producing gasoline, FCC units are also major producers of propylene and, to a lesser extent, raw materials for petrochemical processes.

All of the industrially commercialized FCC catalysts are composed of 10-40% of USY zeolite (Ultra-Stable Y zeolite). The use of USY zeolites as a major catalytic component in FCC processes, in order to convert heavy hydrocarbons into lighter products such as gasoline and diesel, has indeed allowed to revolutionize the refining industry in the 1960s.

USY zeolite is a type of Y zeolite that has undergone stabilization treatment through a steaming process which achieves its partial dealumination and the increase of its Si/Al ratio. This treatment improves the thermal and hydrothermal stability of the zeolites, and therefore their ability to withstand harsh operational environments, while preserving at least to some extent their catalytic properties. This treatment reduces the concentration of Bronsted acid sites of the zeolites, which are responsible for its catalytic activity, and generates secondary mesopores.

Major research effort has been focused on the modification of the textural and chemical properties of USY zeolites, for increasing their catalytic activity and custom-tailoring their properties according to the feedstock characteristics and desired catalytic outputs manifested by the refineries.

The literature is hence rich on USY zeolites modification strategies aiming at increasing the catalysis capacity thereof.

An example of such a modification strategy is described in the publication from Gackowski et al., Microporous and mesoporous materials, 2023, 359: 112626, This document discloses that treating USY zeolites with tetrabutyl ammonium hydroxide in aqueous solution results in a slight increase in the concentration of Bronsted and Lewis acid sites thereof.

The document EP 0528494 discloses a method of treating a Y-type zeolite, such as a USY zeolite, with an alkaline compound such as tetrapropyl ammonium hydroxide, in order to increase the hydrophilicity and decrease the unit cell size thereof.

The US patent application US 2012/258852 discloses a method of preparing mesoporous and/or mesostructured zeolites from a crystalline, substantially microporous zeolite such as a USY zeolite. This method comprises a framework modification step followed by a mesopore introduction step. More particularly, it comprises contacting the zeolite with an acid, then with a base, and finally subjecting it to a thermal treatment at a temperature of at least 450 °C.

However, there is currently no satisfactory method for custom modifying characteristics / properties of USY zeolites or, more generally, microporous crystalline zeolites which have been previously subjected to an at least partial dealumination treatment, for example a stabilization treatment through a steaming process. The invention aims at providing such a method.

More particularly, the invention aims at providing a method for custom modifying the acidic properties and/or the textural characteristics of microporous crystalline zeolites resulting from a dealumination treatment, for example from a stabilization treatment through a water steaming process and/or an acid treatment.

The inventors have now developed a method that makes it possible to achieve these objectives.

The present invention therefore relates to a method of treating a microporous crystalline zeolite which has been previously subjected to a dealumination treatment, in particular for modifying acidic and/or textural properties thereof, which comprises successive steps of:

- a/ impregnating this zeolite with a solution containing a tetraalkyl ammonium hydroxide in a liquid vehicle,
- b/ drying the impregnated zeolite obtained in step a/,

this method comprising a subsequent step of:

- c/ contacting the dried zeolite obtained in step b/ with water vapor at a temperature of between 100 and 200 °C.

A crystalline zeolite is herein defined as a zeolite comprising at least 10 % of crystalline phase. The zeolite to which the method of the invention is applied preferably comprises at least 50 % of crystalline phase, and even more preferably at least 70 % of crystalline phase.

By "which has been previously subjected to a dealumination treatment", it is meant that the microporous crystalline zeolite which is the starting material of the method of the invention has been obtained by subjecting a zeolite to a dealumination treatment.

The dealumination treatment to which the zeolite has been submitted prior to the implementation of the method of the invention can be any type of treatment known by itself for achieving the partial dealumination of zeolites. This treatment can for example be a treatment with water steam, as conventionally implemented for preparing USY zeolites. It can otherwise for example be an acid treatment, also known by itself in the art.

Preferably, the zeolite to which the method of the invention is applied has been previously subjected to a treatment in the presence of steam and and/or to an acid treatment before being subjected to the method of the invention. It preferably has a molar Si/Al ratio higher than 2.5.

The method of the invention itself preferably does not comprise any step of contacting the zeolite with an acid, before or after step a/ of impregnating the zeolite with a solution containing a tetraalkyl ammonium hydroxide in a liquid vehicle.

The zeolite to which the method of the invention is applied is microporous, meaning that it contains micropores, i.e. pores the size of which is less than 2 nm.

Depending on the method which has been used for its dealumination, it may or may not contain mesopores, i.e. pores the size of which is between 2 and 50 nm. By way of example, USY zeolites typically comprise small mesopores, the size of which is around 2 nm, and larger mesopores, the size of which is of about 20 to 30 nm. Zeolites which have been subjected to acid leaching are typically devoid of mesopores.

The method of the invention advantageously induces a loss of the larger micropores/smaller mesopores (i.e., the size of which is around 2 nm) of the zeolite, thereby leading to the obtention of a zeolite having a decreased overall micropore volume and a higher catalysis efficiency.

Moreover, the acidic properties of the zeolite obtained at the end of the method of the invention, in particular the concentration of Bronsted acid sites and Lewis acid sites of this zeolite, can advantageously be tuned as required, by varying the type and amount of tetraalkyl ammonium hydroxide used in the impregnating step a/.

In particular, by an appropriate choice of the type and amount of tetraalkyl ammonium hydroxide used in the impregnating step a/, it is possible to achieve a very high increase in the number of Bronsted acid sites and Lewis acid sites of the zeolite. This increase can be as high as +30 %. The amount of Bronsted acid sites can even be increased by up to +60% when using tetrapropyl ammonium hydroxide in a concentration of 0.8 mmol per gram of zeolite in the impregnating step a/. Moreover, in such conditions, it has been discovered by the inventors that the zeolite obtained at the end of the method of the invention presents, on laboratory scale, a superior catalytic activity in a cumene cracking process than the initial untreated zeolite. An increase of 2 % in the cumene conversion rate can be obtained. Such an increase proves to be of crucial importance on an industrial scale.

In particular embodiments of the invention, the impregnating step a/ uses 0.01 to 8 mmol of tetraalkyl ammonium hydroxide(s) per gram of zeolite. It preferably uses 0.04 to 8 mmol of tetraalkyl ammonium hydroxide(s) per gram of zeolite, more preferably 0.2 to 8 mmol of tetraalkyl ammonium hydroxide(s) per gram of zeolite, and in particular 0.2 to 4 mmol of tetraalkyl ammonium hydroxide(s) per gram of zeolite.

In particular embodiments of the invention, the impregnating step a/ uses 0.2 to 1 mmol of tetraalkyl ammonium hydroxide(s) per gram of zeolite. Preferably, it uses 0.4 to 1 mmol of tetraalkyl ammonium hydroxide(s) per gram of zeolite. These ranges of values are advantageously associated with a maximal increase in the number of acid sites (both Bronsted acid sites and Lewis acid sites) of the zeolite. An amount of 0.8 mmol of tetraalkyl ammonium hydroxide(s) per gram of zeolite is particularly preferred in the context of invention, in particular when the tetraalkyl ammonium hydroxide is tetrapropyl ammonium hydroxide, when seeking for a maximal increase in the acidic properties of the zeolite.

In alternative embodiments of the invention, the impregnating step a/ uses 1.2 to 8 mmol of tetraalkyl ammonium hydroxide(s) per gram of zeolite. Such a range of values advantageously makes it possible to at least partially transform the zeolite into a zeolite having a structure of the MFI type, such as a ZSM-5 zeolite. ZSM-5 is an MFI-structured zeolite containing both silicon and aluminum in its framework, and having a significant catalytic activity. This property is particularly advantageous in the FCC process, where it enhances the yield of olefins from Liquefied Petroleum Gas (LPG). ZSM-5 is a component found in many FCC catalyst formulations, typically constituting a few percent of the catalyst blend, and the production thereof by the method of the invention is therefore highly advantageous.

The zeolite to which the method of the invention is applied can be of any type of crystalline microporous zeolite that has previously undergone a dealumination process.

In preferred embodiments of the invention, the zeolite is a zeolite of the FAU type, and more preferably an Ultrastable Y zeolite (USY zeolite).

The counter-cation of the zeolite is preferably H$^+$. It can otherwise be Na$^+$, K$^+$, etc.

In particular embodiments of the invention the zeolite has a molar Si/Al ratio of between 2.6 and 200, for example equal to 15.

The method of the invention can also be applied, for example, to mordenite (MOR), Beta or ferrierite (FER) zeolites, in particular obtained following a dealumination process.

The method according to the invention may further respond to one or more of the features described below, implemented individually or in each of their technically operating combinations.

The step a/ of impregnating the zeolite with a solution containing a tetraalkyl ammonium hydroxide in a liquid vehicle, herein referred to as the "impregnating step", can be carried out in any way.

In preferred embodiments of the invention, it is carried out by immersing the zeolite powder in a bath of the impregnating solution, preferably under stirring. The immersion time is then preferably of at least 5 minutes, for example between 5 and 60 minutes. It may in particular be equal to 30 minutes. A volume of impregnating solution of between 0.5 and 100 mL per gram of zeolite can for example be used.

The impregnating step can otherwise be carried out by the so-called Incipient Wetness Impregnation technique, which is well-known by the person skilled in the art.

The impregnating step can be carried out at any temperature. It is preferably carried out at a temperature of between 10 and 60 °C, and more preferably at room temperature, i.e. at a temperature of between 20 and 25 °C.

The solution containing a tetraalkyl ammonium hydroxide in a liquid vehicle used in the impregnating step, herein referred to as the "impregnating solution", preferably contains a total concentration of tetraalkyl ammonium hydroxide(s) of between 0.01 and 1 mol/l, more preferably 0.1 mol/l.

The pH of the impregnating solution is preferably between 7 and 12.

In particularly preferred embodiments of the invention, the impregnating step a/ is carried out in the absence of any alkali hydroxide. Therefore, the impregnating solution is preferably devoid of any alkali hydroxide. It is also preferably devoid of acid.

The impregnating solution can comprise a single tetraalkyl ammonium hydroxide or a mixture of different tetraalkyl ammonium hydroxides.

In preferred embodiments of the invention, the alkyl group of at least one tetraalkyl ammonium hydroxide contained in the impregnating solution, preferably of each of the tetraalkyl ammonium hydroxides contained in the impregnating solution, comprises from 1 to 4 carbon atoms.

The impregnating solution preferably comprises, as a tetraalkyl ammonium hydroxide, at least tetrapropyl ammonium hydroxide, i.e., a tetraalkyl ammonium hydroxide wherein the alkyl group comprises 3 carbon atoms. Tetrapropyl ammonium hydroxide is preferably the only tetraalkyl ammonium hydroxide contained in the impregnating solution.

The impregnating solution can also, or otherwise, comprise tetramethyl ammonium hydroxide (the alkyl group of which comprises 1 carbon atom), tetraethyl ammonium hydroxide (the alkyl group of which comprises 2 carbon atoms) and/or tetrabutyl ammonium hydroxide (the alkyl group of which comprises 4 carbon atoms).

By way of example, the impregnating solution can comprise 0.1 mol/l of tetrapropyl ammonium hydroxide as the sole tetraalkyl ammonium hydroxide of the impregnating solution.

The liquid vehicle of the impregnating solution preferably comprises water. It can consist of water.

It can also or otherwise comprise, or consist of, an alcohol, preferably a monoalcohol, i.e. a monoalcohol comprising a single hydroxide group, and more preferably ethanol.

In particular embodiments of the invention, the vehicle of the impregnating solution consists of a mixture of water and one or several alcohol(s), preferably one or several monoalcohol(s). For example, it can consist of a mixture of water and ethanol.

Step b/ of drying the impregnated zeolite obtained in step a/, herein referred to as the "drying step" can be carried out by any technique known in the art.

The drying step is preferably carried out by heating the impregnated zeolite, for example in an oven. In particular embodiments of the invention, the drying step is carried out at a heating temperature of between 30 and 100 °C, preferably at a temperature of between 50 and 100 °C, and more preferably at about 80 °C. The drying step is preferably carried out in appropriate conditions for ensuring a complete removal of the liquid vehicle of the impregnating solution from the zeolite. It falls within the skills of the person skilled in the art to determine the duration of the drying step that is adequate to achieve this objective, in particular according to the specific composition of the liquid vehicle, the specific features of the zeolite and the heating temperature applied in the drying step. As an example, the duration of the drying step may be of between 1 and 24 hours.

In particularly preferred embodiments of the invention, the method does not comprise contacting the dried zeolite obtained in the drying step b/ with liquid water before or during step c/ of contacting said dried zeolite with water vapor at a temperature of between 100 and 200 °C. In other words, after the drying step b/, the zeolite is never brought into contact with liquid water until the end of the contacting step c/, and, more preferably, until the method of the invention has been completed.

Step c/ of contacting the dried zeolite obtained at the end of the drying step b/ with water vapor at a temperature of between 100 and 200 °C is herein referred to as the "contacting step" or the "steam assisted conversion (SAC) treatment". The SAC treatment technique is well-known in itself to the person skilled in the art, who knows perfectly how to implement it.

By way of example, the contacting step c/ can be carried out by introducing the dried zeolite in an autoclave containing liquid water, preferably in such a way that the zeolite never comes into contact with said liquid water, and heating at the desired temperature. According to the invention, this temperature is comprised between 100 and 200 °C. Such a temperature ensures that all the water contained in the autoclave is in vapor form.

The temperature of the water vapor in the contacting step c/ is preferably comprised between 150 and 200 °C, for example of about 180 °C.

The contacting step c/ is preferably carried out for a period of between 2 and 48 hours, for example for about 24 hours.

In preferred embodiments of the invention, the zeolite is not contacted with any acid substance during the contacting step c/. More generally, it is not subjected to any acid treatment throughout the implementation of the method of the invention.

In particular embodiments of the invention, the method comprises, after the contacting step c/, a final step d/ of calcinating the zeolite obtained at the end of the contacting step c/.

This final step d/ of calcinating the zeolite obtained at the end of the contacting step c/, herein referred to as the "calcinating step", can be carried out by any method known to the person skilled in the art. It can for example be carried out by contacting the zeolite with an air flow at an adequate temperature.

The calcinating step of the method of the invention is preferably carried out at a temperature of between 500 and 650 °C, more preferably at about 550 °C.

Such a calcination step advantageously achieves a complete elimination of the tetraalkyl ammonium hydroxide(s) which have been used to impregnate the zeolite and which may obstruct the micropores thereof. It favors an increase in the number of Bronsted acid sites and Lewis acid sites of the zeolite.

The final step d/ of calcinating the zeolite obtained at the end of the contacting step c/ may be carried out for a period of between 0.5 and 8 hours, preferably for about 4 hours.

As explained above, the method of the invention advantageously makes it possible to custom-tailor the characteristics of the initial zeolite, in particular its textural and/or acidic characteristics. In particular, according to its operating conditions, it makes it possible to decrease the number of Bronsted acid sites and Lewis acid sites of the initial zeolite, or to increase this number. This increase can advantageously be very high. It also makes it possible to modify the porosity features of the zeolite, for example suppress the small mesopores thereof.

The method of the invention makes it possible to obtain zeolites with increased catalytic activity, in particular when used in a cumene conversion process. By an appropriate choice of its operating conditions, it also makes it possible to control the type of products obtained at the end of such a catalytic reaction, and for example to promote benzene production.

The zeolites obtained at the end of the method of the invention can prove advantageously useful for use as catalysts in fluid catalytic cracking and hydrocracking processes, in particular in the oil refinery industry, for transforming high boiling point high molecular weight hydrocarbons present in fossil crude oils into lighter and more valuable fractions such as diesel, gasoline and olefinic gases, or for transforming bio-sourced feedstocks.

They may also prove useful for many other applications, depending on their specific characteristics.

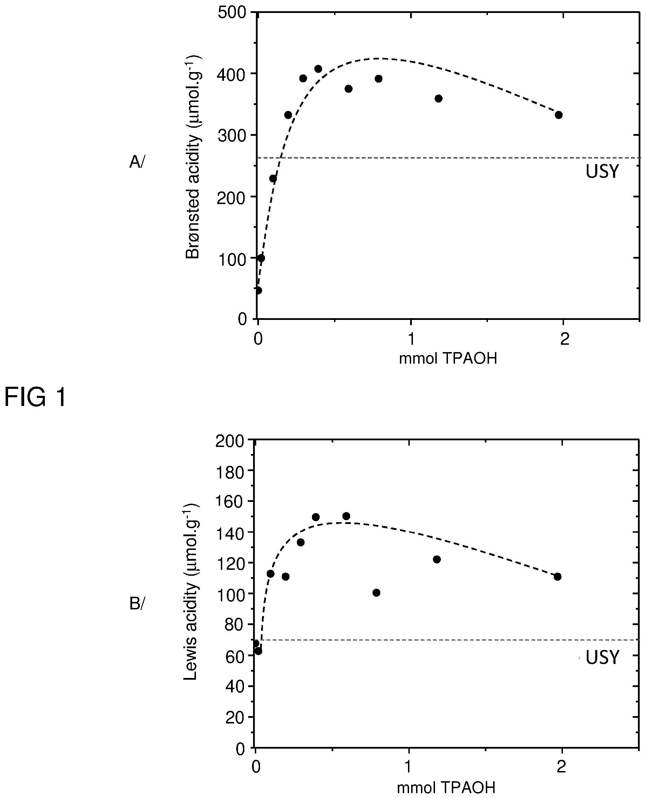

The features and advantages of the invention will emerge more clearly in the light of the following examples of implementation, provided for illustrative purposes only and in no way limitative of the invention, with the support of figures 1 to 6, in which:

- figure 1 shows graphs representing the measured concentrations of Bronsted acid sites (in A/) and Lewis acid sites (in B/) in a USY zeolite after its treatment by a method according to the invention, as a function of the amount of TPAOH (in mmol) implemented in this method for 0.5 g of USY zeolite - for each graph, the acid site concentration for the untreated USY zeolite is indicated by a dotted line ;

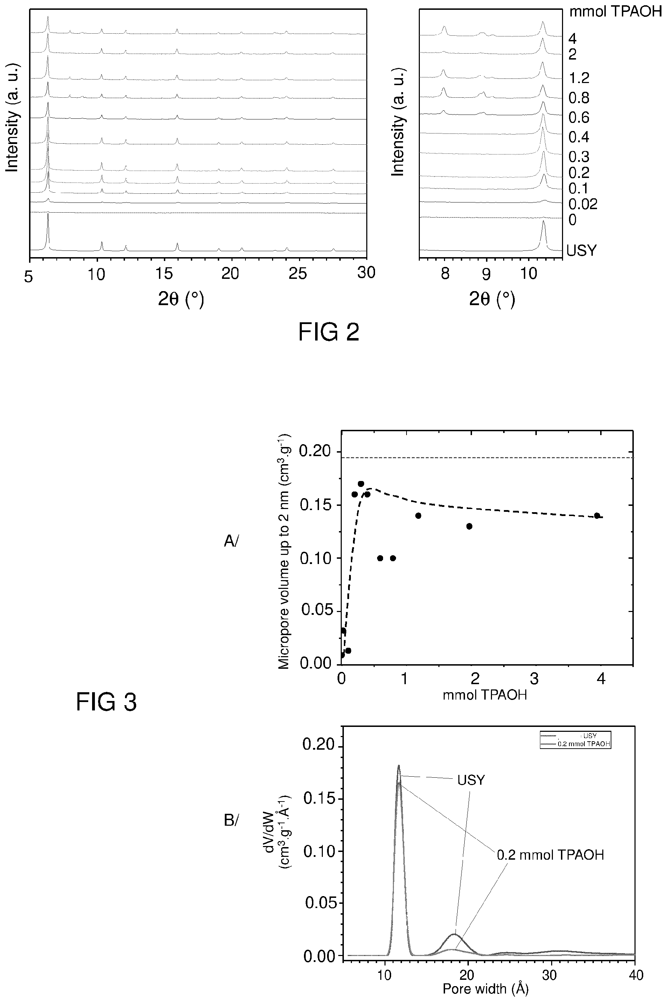

- figure 2 shows XRD patterns of untreated USY zeolite ("USY") and this USY zeolite after its treatment by a method according to the invention, implementing different amounts of TPAOH ("mmol TPAOH") for 0.5 g of the USY zeolite;
- figure 3 shows: in A/, a graph representing the micropore volume up to 2 nm of USY zeolite after its treatment by a method according to the invention, as a function of the amount of TPAOH (in mmol) implemented in this method for 0.5 g of USY zeolite - micropore volume up to 2 nm measured for the untreated USY zeolite is indicated by a dotted line ; in B/, a graph representing the pore size distribution of this zeolite as obtained after treatment with 0.2 mmol TPAOH ("0.2 mmol TPAOH") and of the untreated zeolite ("USY") (derivative of pore volume versus pore width dV/dW as a function of the pore width);

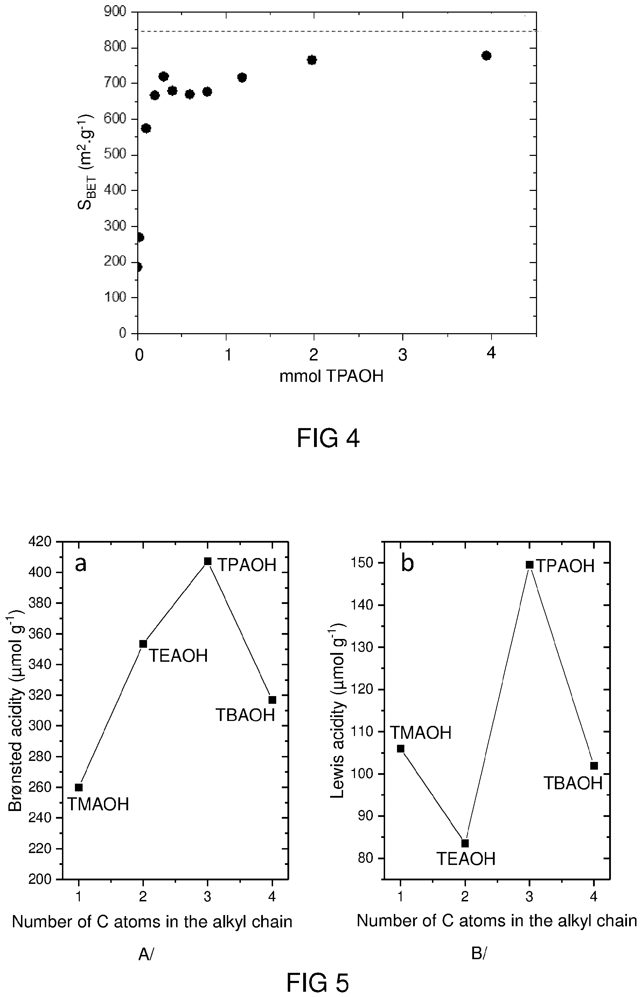

- figure 4 shows a graph representing the pores specific surface area for a USY zeolite after its treatment by a method according to the invention, as a function of the amount of TPAOH (in mmol) implemented in this method for 0.5 g of USY zeolite - pores specific surface area measured for the untreated USY zeolite is indicated by a dotted line;
- figure 5 shows graphs representing the measured concentrations of Bronsted acid sites (in A/) and Lewis acid sites (in B/) in a USY zeolite after its treatment by a method according to the invention, as a function of the number of carbon atoms of the alkyl chain of the tetraalkyl ammonium hydroxide implemented in this method, each tetraalkyl ammonium hydroxide being implemented in an amount of 0.4 mmol for 0.5 g of USY zeolite;

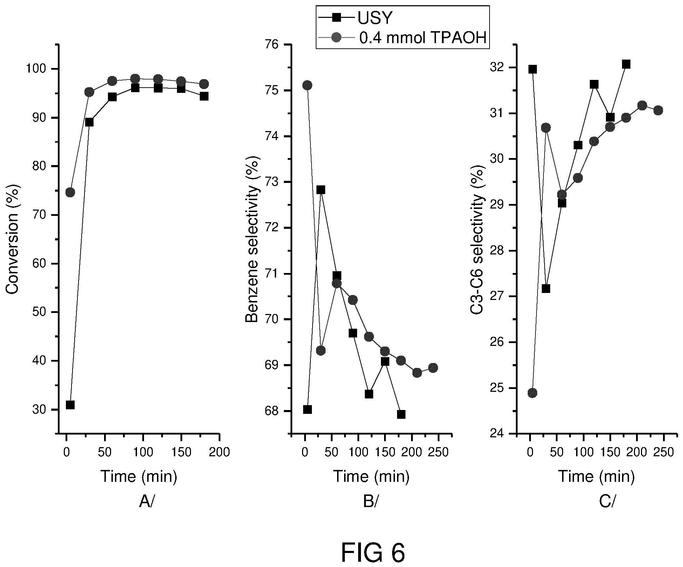

- and figure 6 shows graphs representing, as a function of time, the % of conversion of cumene (A/), the benzene selectivity (B/) and the C3-C6 selectivity (C/) in cumene cracking experiments using, as a catalyst, an untreated USY zeolite ("Zeolite") or the same USY zeolite after treatment by a method according to the invention using 0.4 mmol of TPAOH for 0.5 g of zeolite in the impregnating step ("0.4 mmol TPAOH").

Example 1 - Method of treating USY zeolite

Samples of commercial USY zeolite (CBV 720, Zeolyst International, a microporous crystalline zeolite presenting mesopores) (0.5 g) are impregnated by immersion under stirring in containers containing different volumes of a 0.1 M aqueous solution of tetrapropyl ammonium hydroxide (TPAOH), these volumes comprising the following quantities of TPAOH: 0 mmol, 0.02 mmol, 0.1 mmol, 0.2 mmol, 0.3 mmol, 0.4 mmol, 0.6 mmol, 0.8 mmol, 1.2 mmol, 2 mmol, 4 mmol. After drying the impregnated samples in an oven at 80 °C for 12 h, these powdery samples are introduced into a ceramic crucible, placed into an autoclave containing 5 mL of distilled water and treated with steam at 180 °C for 24 h (Steam assisted conversion (SAC) treatment). The recovered powders are calcined under air flow at 550 °C during 4 h.

Example 2 - Analysis of the zeolites

The modified USY zeolites obtained at Example 1 are analyzed as follows.

2.1/ Measurement of acid sites concentrations

The amount of Bronsted and Lewis acid sites in the zeolites are determined by pyridine chemisorption followed by Fourier-transform infrared spectroscopy (FTIR). Experiments are carried out in a quartz IR cell equipped with $CaF_2$ windows, connected to vacuum and atmospheric systems, as well as temperature-controlled oven.
Prior to analysis, the samples are pressed into self-supported wafers of 2 cm$^2$ (0.5 ton) of approximately 15 mg.
The acid site concentrations are determined by pyridine adsorption at 150 °C. After establishing a pressure of 1 Torr at equilibrium, the cell is evacuated at 150 °C. The infrared (IR) spectra are recorded at room temperature after the activation period and after pyridine thermodesorption in vacuum ($10^{-3}$ Pa) at 150 °C.
The amount of pyridine adsorbed on Bronsted [PyH+] and Lewis [PyL] sites is determined from the integration of bands at 1545 and 1454 cm$^{-1}$ respectively, using extinction coefficients previously determined.
All spectra are recorded in the range of 1000 to 4000 cm$^{-1}$ on a Nicolet 5700 FT-NIR apparatus.
The results obtained are shown in figure 1, in A/ for the Bronsted acid sites and in B/ for the Lewis acid sites. It is observed that both the Bronsted acid sites (BAS) concentration and the Lewis acid sites (LAS) concentration can be tuned by varying the amount of TPAOH used during the impregnation step of the method. If the TPAOH amount is below 0.4 mmol per gram of zeolite (0.2 mmol for 0.5 g of zeolite) a lower amount of BAS is found compared to the untreated zeolite (BAS of pristine zeolite: 261 $\mu$mol.g$^{-1}$). At TPAOH amounts between 0.4 and 2.4 mmol per gram of zeolite (0.2 to 1.2 mmol for 0.5 g of zeolite) a BAS concentration higher than 350 $\mu$mol.g$^{-1}$ is achieved. LAS concentration is higher than 110 $\mu$mol.g$^{-1}$ for TPAOH amounts higher than 0.4 mmol per gram of zeolite (0.2 mmol for 0.5 g of zeolite).

2.2/ Measurement of crystallinity

X-ray powder diffraction (XRD) patterns are collected using a PANalytical Empyrean X-ray diffractometer using CuK$\alpha$ radiation (1.54059 Å) from 5° to 50° 2$\theta$.
The XRD patterns are shown in figure 2, for each amount (in mmol) of TPAOH used in the method for treating 0.5 g of the zeolite, and for the untreated USY zeolite ("USY"). Crystallinity reduction is observed for amounts of TPAOH of less than 0.2 mmol per gram of zeolite (0.1 mmol for 0.5 g of zeolite).
For amounts of TPAOH between 0.2 and 0.8 mmol per gram of zeolite (0.1 to 0.4 mmol for 0.5 g of zeolite) a high crystallinity is observed.
For amounts of TPAOH higher than 0.8 mmol per gram of zeolite (0.4 mmol for 0.5 g of zeolite) partial transformation into MFI zeolite is observed.

2.3/ <u>Measurement of pore volume and specific surface area</u>

The volume of the pores of the zeolites is measured by the nitrogen physisorption technique, using a Micromeritics 3Flex at 77 K. Approximately 50 mg of each sample are outgassed at 300 °C for 12 h before the measurement. Microporous volumes and specific surface areas are calculated through BET and t-plot method.

The results obtained are shown in figure 3 for the micropore volume and in figure 4 for the pores specific surface area. Upon the modification of the zeolite by the method of the invention, the fraction of larger micropores is removed for a large range of TPAOH amount.

Overall, these results demonstrate that after treatment with a method according to the invention the zeolites present modified textural and acidic properties, which can be controlled by varying the amount of TPAOH used in the impregnating step.

<u>Example 3 - Variation of the tetraalkyl ammonium hydroxide</u>

The same experiment as in Example 1 is carried out for tetraalkyl ammonium hydroxides having different lengths for their alkyl chain: tetramethyl ammonium hydroxide (TMAOH), tetraethyl ammonium hydroxide (TEAOH), tetrapropyl ammonium hydroxide (TPAOH) and tetrabutyl ammonium hydroxide (TBAOH). The amount of each tetraalkyl ammonium hydroxide implemented in the impregnating step of the method is 0.4 mmol for 0.5 g of the USY zeolite.

The amount of Bronsted acid sites and Lewis acid sites in the zeolites obtained at the end of the method are determined as described in Example 2, section 2.1/. The results obtained are shown in figure 5, in A/ for the Bronsted acid sites (BAS) and in B/ for the Lewis acid sites (LAS). For all the tetraalkyl ammonium hydroxides the BAS concentrations and the LAS concentrations are higher than those of the untreated zeolite. The highest increase in both BAS and LAS concentrations is observed with TPAOH.

<u>Example 4 - Catalytic properties</u>

The catalytic properties for cumene cracking of the zeolite obtained in Example 1, using 0.4 mmol of TPAOH for 0.5 g of USY zeolite, are assessed in this example.

The experiment is carried out in a tubular glass fixed-bed microreactor under plug flow conditions using, as the catalyst forming the fixed-bed, 50 mg of untreated zeolite or 50 mg of the zeolite treated by the method of the invention. Prior to the cracking reaction, the catalysts are pretreated for 4 h at 300 °C under a flow of dry nitrogen. Nitrogen saturated with cumene which has been vaporized at 25 °C is then passed through the reactor (flow rate = 16 $cm^3.min^{-1}$) at the reaction temperature of 300 °C. The reaction products are sampled during 240 min in a 10-port valve, then analyzed by a gas chromatograph (GC) equipped with a Flame Ionization Detector (FID), with a 50 m $Cp-Al_2O_3/Na_2SO_4$ capillary column of 0.32 mm internal diameter and a 60 m BR wax column of 0.25 internal diameter. The operating parameters are the following ones: run from 35 to 200 °C with a heating rate of 5°C/min; upon reaching 200 °C the temperature is maintained for 10 min.

The % of conversion of cumene, the benzene selectivity and the C3-C6 selectivity are determined based on the data thus obtained using the following equations:

$$C_{IPB} = \frac{IPB_c}{IPB_{ir}} x\ 100 \tag{1}$$

$$S_{Prod} = \frac{Prod_f}{n_{Hydrocarbon\ products}} x\ 100 \tag{2}$$

where:

$C_{IPB}$ is the cumene conversion, $IPB_c$ is the amount of cumene consumed at each point, and $IPB_{ir}$ is the sum of reaction products,

$S_{prod}$ is the selectivity with respect to a specific product, $Prod_f$ is the amount of this reaction product and $n_{Hydrocarbon\ products}$ is the total amount of all reaction products.

The results are shown in figure 6, respectively in A/, B/ and C/. It is observed that the zeolite treated according to the invention ("0.4 mmol TPAOH" on the graphs) presents a higher cumene conversion compared to the untreated zeolite (maximal % of conversion: 98% and 96%, respectively). The selectivity for benzene as a product of the catalytic reaction is also globally higher. The selectivity for C3-C6 olefins as products of the catalytic reaction is slightly lower.

These results demonstrate that after treatment with a method according to the invention the zeolites present modified catalytic properties. These properties can advantageously be controlled by appropriate selection of the operating conditions of the method of the invention.

**Claims**

1.  Method of treating a microporous crystalline zeolite which has been previously subjected to a dealumination treatment, for modifying textural and/or acidic properties thereof,

    said method comprising successive steps of:

    - a/ impregnating said zeolite with a solution containing a tetraalkyl ammonium hydroxide in a liquid vehicle,
    - b/ drying the impregnated zeolite obtained in step a/,

    and being **characterized in that** it comprises a subsequent step of:

    - c/ contacting the dried zeolite obtained in step b/ with water vapor at a temperature of between 100 and 200 °C.

2.  Method according to claim 1, wherein said impregnating step a/ is carried out in the absence of any alkali hydroxide.

3.  Method according to any one of claims 1 or 2, which does not comprise contacting said dried zeolite obtained in step b/ with liquid water before or during said contacting step c/.

4.  Method according to any one of claims 1 to 3, wherein the alkyl group of said tetraalkyl ammonium hydroxide comprises from 1 to 4 carbon atoms.

5.  Method according to claim 4, wherein said tetraalkyl ammonium hydroxide is tetrapropyl ammonium hydroxide.

6.  Method according to any one of claims 1 to 5, wherein said solution contains 0.01 to 1 mol/l of tetraalkyl ammonium hydroxide(s).

7.  Method according to any one of claims 1 to 6, wherein said impregnating step a/ uses 0.01 to 8 mmol of tetraalkyl ammonium hydroxide(s) per gram of said zeolite.

8.  Method according to claim 7, wherein said impregnating step a/ uses 0.4 to 1 mmol of tetraalkyl ammonium hydroxide(s) per gram of said zeolite.

9.  Method according to claim 7, wherein said impregnating step a/ uses 1.2 to 8 mmol of tetraalkyl ammonium hydroxide(s) per gram of said zeolite.

10. Method according to any one of claims 1 to 9, wherein said liquid vehicle comprises water.

11. Method according to any one of claims 1 to 10, wherein said drying step b/ is carried out at a temperature of between 30 and 100 °C.

12. Method according to any one of claims 1 to 11, wherein said contacting step c/ is carried out for a period of between 2 and 48 hours.

13. Method according to any one of claims 1 to 12, comprising a final step d/ of calcinating the zeolite obtained at the end of the contacting step c/, preferably at a temperature of between 500 and 650 °C.

14. Method according to claim 13, wherein said final step d/ of calcinating the zeolite obtained at the end of the contacting step c/ is carried out for a period of between 0.5 and 8 hours.

15. Method according to any one of claims 1 to 14, wherein said zeolite is an Ultrastable Zeolite Y.

**A/**

**FIG 1**

**B/**

FIG 2

FIG 3

FIG 4

A/

B/

FIG 5

FIG 6

Europäisches
Patentamt

European
Patent Office

Office européen
des brevets

## EUROPEAN SEARCH REPORT

**Application Number**

EP 24 30 6461

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 10 350 585 B1 (AL-HERZ MANSOUR ALI [SA] ET AL) 16 July 2019 (2019-07-16)<br>* column 8, line 33 - column 9, line 43; figure 1 *<br>* the whole document *<br>----- | 1-5, 10-13<br>6-9,14, 15 | INV.<br>C01B39/02<br>B01J29/08<br>B01J37/10<br>C01B39/24 |
| X,D | HAN Y. ET AL: "Generation of mesoporosity in H-Y zeolites by basic or acid/basic treatments: Towards a guideline of optimal Si/Al ratio and basic reagent",<br>MICROPOROUS AND MESOPOROUS MATERIALS, vol. 365, 1 February 2024 (2024-02-01), page 112906, XP093239189,<br>Amsterdam ,NL<br>ISSN: 1387-1811, DOI: 10.1016/j.micromeso.2023.112906<br>* 2.2 Preparation of hierarchical zeolite; page 2; figure 8; table 1 *<br>& Han Y. ET AL: "Supporting information: Generation of mesoporosity in H-Y zeolites by basic or acid/basic treatments: Towards a guideline of optimal Si/Al ratio and basic reagent",<br>Microporous and Mesoporous Materials, vol. 365, 1 February 2024 (2024-02-01), page 112906, XP093239197,<br>Amsterdam ,NL<br>ISSN: 1387-1811, DOI: 10.1016/j.micromeso.2023.112906<br>* the whole document *<br>-----<br>-/-- | 1-15 | |
| | | | TECHNICAL FIELDS SEARCHED (IPC)<br><br>C01B<br>B01J |

The present search report has been drawn up for all claims

| Place of search | Date of completion of the search | Examiner |
|---|---|---|
| The Hague | 11 February 2025 | Follens, Lana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................................
& : member of the same patent family, corresponding document

EPO FORM 1503 03.82 (P04C01)

**page 1 of 2**

Europäisches
Patentamt

European
Patent Office

Office européen
des brevets

## EUROPEAN SEARCH REPORT

Application Number

EP 24 30 6461

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | THIJS ENNAERT ET AL: "Potential and challenges of zeolite chemistry in the catalytic conversion of biomass", CHEMICAL SOCIETY REVIEWS, vol. 45, no. 3, 21 December 2015 (2015-12-21), pages 584-611, XP055420313, UK ISSN: 0306-0012, DOI: 10.1039/C5CS00859J * page 600, left-hand column, paragraph first; figures 10-11 * * the whole document * ----- | 1-15 | |

TECHNICAL FIELDS
SEARCHED        (IPC)

The present search report has been drawn up for all claims

| Place of search | Date of completion of the search | Examiner |
|---|---|---|
| The Hague | 11 February 2025 | Follens, Lana |

EPO FORM 1503 03.82 (P04C01)

## ANNEX TO THE EUROPEAN SEARCH REPORT
## ON EUROPEAN PATENT APPLICATION NO.

EP 24 30 6461

11-02-2025

| Patent document cited in search report | | Publication date | Patent family member(s) | | Publication date |
|---|---|---|---|---|---|
| US 10350585 | B1 | 16-07-2019 | CN | 112638525 A | 09-04-2021 |
| | | | EP | 3833475 A1 | 16-06-2021 |
| | | | JP | 7130846 B2 | 05-09-2022 |
| | | | JP | 2021533070 A | 02-12-2021 |
| | | | KR | 20210056346 A | 18-05-2021 |
| | | | SG | 11202100081U A | 25-02-2021 |
| | | | US | 10350585 B1 | 16-07-2019 |
| | | | US | 10427142 B1 | 01-10-2019 |
| | | | WO | 2020036985 A1 | 20-02-2020 |

For more details about this annex : see Official Journal of the European Patent Office, No. 12/82

## REFERENCES CITED IN THE DESCRIPTION

**Patent documents cited in the description**

- EP 0528494 A

- US 2012258852 A

**Non-patent literature cited in the description**

- **GACKOWSKI et al.** *Microporous and mesoporous materials*, 2023, vol. 359, 112626